# EUROPEAN PATENT APPLICATION

(11) **EP 3 104 204 A1**
(43) Date of publication of application: **14.12.2016**
(21) Application number: 16161152.0
(22) Date of filing: 18.03.2016
(51) Int. Cl.: G02B 6/44

(54) **VERSATILE EASY ACCESSABLE OPTICAL FIBER CABLE**

(30) Priority: 09.06.2015 IN 2208MU2015; 09.06.2015 IN 2210MU2015; 09.06.2015 IN 2211MU2015; 09.06.2015 IN 2212MU2015
(71) Applicant: Sterlite Technologies Ltd, Maharashtra 431 136 (IN)
(72) Inventor: KUMAR, Sravan, 500039 Telangana (IN); SAHOO, Kishore, Haveli (IN); SRIVASTAVA, Shivam, Madhya Pradesh (IN); TENZING, Kangbang Singh, Pin No. 795001 Manipur (IN); KUMAR, Roshan, 851213 Bihar (IN); LIU, Buddy, 210032 Nanjing (CN)
(74) Representative: Browne, Robin Forsythe

(57) **Abstract**

Disclosed is an optical fiber cable. The optical fiber cable includes a plurality of sleeves (105a-k; 205a-k; 305a-k) substantially along a longitudinal axis of the optical fiber cable. Further, the optical fiber cable includes a first layer (120; 220; 320) surrounding the plurality of sleeves (105a-k; 205a-k; 305a-k). Furthermore, the optical fiber includes a second layer (125; 225; 325) surrounding the first layer (120; 220; 320). In addition, the optical fiber cable includes a third layer (130; 230; 330) surrounding the second layer (125; 225; 325). The second layer (125; 225; 325) prevents ingression of water inside the plurality of sleeves (105a-k; 205a-k; 305a-k). Moreover, the third layer (130; 230; 330) has a plurality of strength members (135a-b; 235a-b; 335a-b) embedded inside the third layer. In addition, each of the plurality of strength members (135a-b; 235a-b; 335a-b) is coated with a layer of ethylene acrylic acid (140a-b; 240a-b; 340a-b).

## Description

### TECHNICAL FIELD

The present application in based on, and claims priority from an Indian application number 2208/MUM/2015**,** 2210/MUM/2015**,** 2211/MUM/2015 **and** 2212/MUM/2015 filed on 9th June,2015**.** The present disclosure relates to the field of fiber optics and more specifically to an optical fiber cable for indoor, outdoor and underground applications.

### BACKGROUND

Optical fiber cables have secured an important position in building network of modem communication systems across the world. The optical fiber cables are sensitive to conditions like crushes, kinks, bends and presence of water and/or moisture. Specifically, the ingression of water and other waste in due course of time degrade or destroy the optical fiber cables. Traditionally, the structure of optical fiber cables includes a buffer tube that encloses one or more optical fibers in a buffer tube sheath. The buffer tube sheath protects the optical fibers from physical damage. In general, the buffer tubes are stranded and surrounded by tapes, binding heads (or yarn layer) and an outer sheathing layer. The binding heads (or yarn layer) covers the tapes. These binding heads restrains the movement of the buffer tubes.

The conventional structures have many drawbacks. The conventional structures fail to prevent sticking of binding heads (or yarn layer) to the outer sheathing layer when the outer sheathing layer comes in contact with water. The sticking of binding heads (or yarn layer) to the outer sheathing layer degrades and/or destroys the optical fiber cable. In addition, the conventional structure of the optical fiber cable uses strength members embedded inside the outer sheathing layer to hold and/or strengthen the cable against tensile forces. These strength members are vulnerable to slip inside the outer sheathing layer in situations when tensile forces are applied on the optical fiber cable. The slipping of strength members inside the outer sheathing layer decreases the gripping strength of the optical fiber cable against tensile forces.

In light of the above stated discussion, there is a need for a robust, efficient and durable optical fiber cable that overcomes the above stated disadvantages.

In light of the above discussion, there is a need for a robust, reliable and durable optical fiber cable that overcomes the above stated drawbacks.

### SUMMARY

The present disclosure seeks to provide an optical fiber cable.

The present disclosure also seeks to provide an optical fiber cable suitable for redeployment in underground, aerial and home. In one aspect, an embodiment of the present disclosure provides an optical fiber cable. An optical fiber cable comprising:
a plurality of sleeves (105a-k; 205a-k; 305a-k) substantially along a longitudinal axis of the optical fiber cable, each of the plurality of sleeves (105a-k; 205a-k; 305a-k) encloses a plurality of optical fibers (110; 210; 310);
a first layer (120; 220; 320) surrounding the plurality of sleeves (105a-k; 205a-k; 305a-k), the first layer (120; 220; 320) is made of a pre-defined number of stacked layers of yarn, the pre-defined number of the stacked layers of yarn in the first layer (120; 220; 320) defines tensile strength of the optical fiber cable;
a second layer (125; 225; 325) surrounding the first layer (120; 220; 320), the second layer (125; 225; 325) prevents ingression of water inside the plurality of sleeves (105a-k; 205a-k; 305a-k); and
a third layer (130; 230; 330) surrounding the second layer (125; 225; 325), characterized in that the third layer (130; 230; 330) has a plurality of strength members (135a-b; 235a-b; 335a-b) embedded inside the third layer (130; 230; 330), each of the plurality of strength members (135a-b; 235a-b; 335a-b) is coated with a layer of ethylene acrylic acid (140a-b; 240a-b; 340a-b), the layer of ethylene acrylic acid (140a-b; 240a-b; 340a-b) prevents slipping of the plurality of strength members (135a-b; 235a-b; 335a-b), the second layer (125; 225; 325) prevents sticking of the first layer (120; 220; 320) to the third layer (130;140; 150) at a pre-determined range of temperature in a range of 160°C-230 °C and prevents ingression of water inside the optical fiber cable.

Embodiments of the present disclosure substantially eliminate or at least partially address the aforementioned problems in the prior art, and provides an optical fiber cable which has kink free sleeves and can bent to approximately five millimeters diameter for short term. The presence of the second layer between the first layer and the third layer prevents the sticking of the first layer with third layer. This results in easy installation of the optical fiber cable. The optical fiber cable is suitable for outdoor applications. Moreover, the optical fiber cable is used for applications where rodent protection and high crush resistance are required. In addition, the optical fiber cable is used for underground deployment. The layer of fiber glass yarns or the plurality of strength members between the third layer and the fourth layer provides additional hardness to the optical fiber cable. The layer of glass fibers yarns resists the rodent bites as the glass fibers of the fiber glass yarns repels the rodents from biting or chewing the optical fiber cable. The plurality of strength members allows the sleeves cable to withstand high crush forces.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
FIG. 1A illustrates a cross sectional view of an optical fiber cable for indoor and outdoor applications, in accordance with an embodiment of the present disclosure;
FIG. 1B illustrates a perspective view of the optical fiber cable of FIG. 1A, in accordance with an embodiment of the present disclosure;
FIG. 2A illustrates a cross sectional view of the optical fiber cable for an underground deployment, in accordance with another embodiment of the present disclosure;
FIG. 2B illustrates a perspective view of the optical fiber cable of FIG. 2A for the underground deployment, in accordance with another embodiment of the present disclosure;
FIG. 3A illustrates a cross sectional view of the optical fiber cable with high crush resistance, in accordance with yet another embodiment of the present disclosure;
FIG. 3B illustrates a perspective view of the optical fiber cable of FIG. 3A, in accordance with yet another embodiment of the present disclosure; and

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

In one aspect, an embodiment of the present disclosure provides an optical fiber cable. The optical fiber cable includes a plurality of sleeves substantially along a longitudinal axis of the optical fiber cable. Further, the optical fiber cable includes a first layer surrounding the plurality of sleeves. Furthermore, the optical fiber includes a second layer surrounding the first layer. In addition, the optical fiber cable includes a third layer surrounding the second layer. Further, each of the plurality of sleeves encloses a plurality of optical fibers. The first layer is made of a pre-defined number of stacked layers of yarn. Furthermore, the pre-defined number of the stacked layers of yarn in the first layer defines tensile strength of the optical fiber cable. The second layer prevents ingression of water inside the plurality of sleeves. Moreover, the third layer has a plurality of strength members embedded inside the third layer. In addition, each of the plurality of strength members is coated with a layer of ethylene acrylic acid. The layer of ethylene acrylic acid prevents slipping of the plurality of strength members. The second layer prevents sticking of the first layer to the third layer and prevents ingression of water inside the optical fiber cable.

According to an embodiment, the optical fiber cable has a layered structure and distribution of discrete elements. The diameter of the optical fiber cable depends on dimensions of each layer in the structure of the optical fiber cable. In an embodiment of the present disclosure, the diameter of the optical fiber cable is 5.9 mm. In another embodiment of the present disclosure, the diameter of the optical fiber cable is about 12.1 mm. In yet another embodiment of the present disclosure, the diameter of the optical fiber cable is about 4 ± 0.02 millimeters. The optical fiber cable 200 is resistant to rodent bites and resistant to crush forces.

According to an embodiment, each of the plurality of sleeves is a tube for encapsulating the plurality of optical fibers. In an embodiment of the present disclosure, each sleeve of the plurality of sleeves is made of thermoplastic co-polyester elastomer (hereinafter "TPE"). Each of the plurality of sleeve provides mechanical isolation, physical damage protection and identification of each of the plurality of fibers. In addition, each of the plurality of sleeves may tear off by bare hands. The tear of the plurality of sleeves by bare hands facilitates monitoring structural defects in the plurality of fibers. In another embodiment of the present disclosure, each sleeve of the plurality of sleeves is made of a low smoke zero halogen (hereinafter "LSZH") material. The plurality of sleeves may be more or less than 12 in number. Moreover, each of the plurality of sleeves may be a loose tube or a semi-tight tube. In an embodiment of the present disclosure, each of the plurality of sleeves is filled with a water blocking gel for the semi-tight tube. The water blocking gel may be made of a thixotropic gel. The water blocking gel prevents the ingression of water inside each of the plurality of sleeves. In addition, each sleeve is characterized by an inner diameter and an outer diameter. In an embodiment of the present disclosure, the inner diameter is 1.05 ± 0.05 millimeters (mm) and the outer diameter is 1.3 ± 0.1 mm. In another embodiment of the present disclosure, the inner diameter is 1.05 millimeters and the outer diameter is 1.40 mm. The optical fiber cable may have more or less than 11 sleeves. Furthermore, the plurality of sleeves is stranded about each other to form a stranded core. In an embodiment of the present disclosure, the plurality of sleeves is helically stranded substantially along the longitudinal axis. The helical stranding is turning of each of the plurality of sleeves substantially along the longitudinal axis periodically in a pre-defined direction. The pre-defined direction is at least one of a clockwise direction and an anticlockwise direction. Moreover, the helical stranding of the plurality of sleeves retains lay length. The lay length is less than circumference of barrel diameter of a drum for winding of the optical fiber cable. In another embodiment of the present disclosure, the plurality of sleeves is S-Z stranded substantially along the longitudinal axis. In addition, the lay length is the longitudinal distance along the optical fiber cable for one sleeve to go all the way around the optical fiber cable. Further, the S-Z fashion refers to a form of stranding where the plurality of sleeves is stranded around axis of the optical fiber cable. The plurality of sleeves is rotated in an S-Z fashion for the pre-defined number of the turns. In an embodiment of the present disclosure, the pre-defined number of turns lies in a range of 2-5. The plurality of sleeves is passed through a calcium stearate powder chamber prior to S-Z stranding. The calcium stearate powder reduces friction between each of the plurality of sleeves. In addition, the reduction of friction by the calcium stearate powder facilitates pulling of each sleeve from the stranded plurality of sleeves. In addition, the plurality of sleeves is S-Z stranded around a longitudinal axis of the optical fiber cable in sections. In addition, each of the plurality of sleeves is wound substantially along the longitudinal axis in sections with a first direction of winding in an S-shape alternating with the sections with a second direction of winding in a Z-shape. Moreover, the S-Z stranding provides a uniform stress distribution to each of the plurality of sleeves. The SZ stranding of the plurality of sleeves is performed to obtain a pre-defined lay length. In general, an average lay length is a distance between the two consecutive reversal points in the SZ stranding of the plurality of sleeves divided by number of turns. In addition, a shorter lay length denotes a higher amount of twist in each of the plurality of sleeves and fiber surface stress. Similarly, a longer lay length denotes a non-uniform stress distribution and high signal losses in the optical fiber cable. Moreover, the stranding of the plurality of sleeves provides an equal distribution of stress among each of plurality of sleeves. The binding of the stranded plurality of sleeves is performed for retention of the lay length and the uniform stress distribution along length of the optical fiber cable.

According to an embodiment, each of the plurality of optical fibers touches each of a corresponding plurality of sleeves in an enclosed form. In addition, the plurality of optical fibers is divided among each of the plurality of sleeves. Each sleeve of the plurality of sleeves may include more or less than 12 fibers. Further, the plurality of optical fibers is color coded for each sleeve of the plurality of sleeves. In an embodiment of the present disclosure, the optical fiber cable has a total of 12 optical fibers with a diameter of about four to seven millimeters. In another embodiment of the present disclosure, the optical fiber cable has the total of 24 optical fibers with the diameter of about 6.5 to 8.5 mm. In yet another embodiment of the present disclosure, the optical fiber cable has the total of 48 optical fibers with the diameter of about 7.2 to 9.2 millimeters. In yet another embodiment, the optical fiber cable has the total of 72 optical fibers with the diameter of about 8.2 to 10.2 mm. In yet another embodiment, the optical fiber cable has the total of 96 optical fibers with the diameter of about 9.5 to 11.5 mm. In yet another embodiment of the present disclosure, the optical fiber cable has the total of 144 optical fibers with the diameter of about 10.4 to 12.4 mm. In yet another embodiment, the optical fiber cable has the total of 28 optical fibers with the diameter of about 12.9 to 14.9 millimeters. In yet another embodiment, the optical fiber cable has the total of 432 optical fibers with the diameter of about 15.4 to 17.4 millimeters. In addition, an increase in the length of the plurality of sleeves results in micro and macro bends inside each of the plurality of optical fibers. The micro and the macro bends results in higher attenuation in the optical fiber cable. The stranded plurality of sleeves rotates in opposite direction after the pre-defined number of turns due to reverse oscillations.

According to an embodiment, the plurality of yarn threads protects the plurality of sleeves from water ingression and moisture interaction. The plurality of yarn threads swells from absorption of the water and the moisture. In addition, each of the plurality of yarn threads is a super absorbent polymer (hereinafter "SAP") coated polyester thread. In general, the SAP is a polymer that absorbs and retains extremely large amounts of any liquid relative to their own mass. Examples of SAP materials include but may not be limited to a polyacrylamide copolymer, an ethylene maleic anhydride copolymer, a cross-linked carboxymethylcellulose, a polyvinyl alcohol copolymer, a cross-linked polyethylene oxide and a starch grafted copolymer of polyacrylonitrile. The plurality of yarn threads may include any number of the yarn threads. In an embodiment of the present disclosure, the number of the yarn threads is more than two. In another embodiment of the present disclosure, the number of the yarn threads is less than two.

According to an embodiment, the first layer includes a pre-defined number of stacked layers of stacked over each other. In addition, the first layer is made of a high strengthening aramid yarn. The first layer is a binding element for the stranded plurality of sleeves. In an embodiment of the present disclosure, the pre-defined number of stacked layers of the yarn is 5. In another embodiment of the present disclosure, the pre-defined number of stacked layers of the yarn is 8. In yet another embodiment of the present disclosure, the pre-defined number of the stacked layers of yarn is more or less than 5. The first layer reduces the stress on the optical fibers in high tensile load environment. In an embodiment of the present disclosure, the thickness of the first layer is about 0.3 mm. In another embodiment of the present disclosure, the thickness of the first layer is about 1 mm. The first layer preserves the lay length of the plurality of sleeves in the optical fiber cable.

According to an embodiment, the second layer provides barrier to prevent the ingression of the water and the moisture. In addition, the second layer is made of the SAP type material. The second layer is placed underneath the third layer. The arrangement of second layer between the first layer and the third layer prevents sticking of the first layer to the third layer during sheathing process. In addition, the arrangement of the first layer and the third layer prevent sticking in a longitudinal and a radial direction.

According to an embodiment, the third layer is made up of a strong polymer based jacket with the inherent ability to resist crushes, kinks and tensile stress. In an embodiment of the present disclosure, the third layer is made of the LSZH material. In another embodiment of the present disclosure, the third layer is made of a high density polyethylene material (hereinafter "HDPE"). In another embodiment of the present disclosure, the third layer is made of a medium density polyethylene material (hereinafter "MDPE"). In yet another embodiment of the present disclosure, the third layer is made of any other suitable material. In an embodiment of the present disclosure, the third layer has a pre-determined thickness of about 1 mm. In another embodiment of the present disclosure, the third layer has a thickness of about 1.6 mm. In yet another embodiment of the present disclosure, the third layer has a thickness of about 2.4mm.

According to an embodiment, the plurality of strength members extends longitudinally in the third layer along the length of the optical fiber cable. In an embodiment of the present disclosure, the third layer can contain two or more strength members. In an embodiment of the present disclosure, each of the plurality of strength members is circular in cross section. Moreover, the plurality of strength members provides robustness and tensile strength to the optical fiber cable. The plurality of strength members includes a first strength member and a second strength member. Accordingly, the first strength member and the second strength members act as anti-buckle or anti-shrink elements. In addition, the plurality of strength members prevents the third layer from shrinkage. In an embodiment of the present disclosure, location of each of the plurality of strength members is diametrically opposite in a vertical plane. In another embodiment of the present disclosure, the location of each of the plurality of strength members is diametrically opposite in a horizontal plane. In an embodiment of the present disclosure, each of the plurality of strength members may be made of any suitable metal or non-metal. In another embodiment of the present disclosure, each of the plurality of strength members is made of fiber reinforced plastic (hereinafter "FRP"). In an embodiment of the present disclosure, diameter of the first strength member and the second strength member is about 1 mm. In another embodiment of the present disclosure, the diameter of the first strength member and the second strength member is about 1.4 mm. The optical fiber cable may have more or less than two strength members.

According to an embodiment, the coating of EAA and the coating of EAA on the first strength member and the second strength member provides resistance to tensile forces against the third layer. In addition, the coating of EAA and the coating of EAA prevents slipping of the plurality of strength members. In general, the coating of EAA and the coating of EAA provides frictional resistance between each of the plurality of strength members and the third layer against longitudinal tensile stress.

According to an embodiment, the optical fiber cable is a direct buried optical fiber cable. In addition, the optical fiber cable can be directly buried underground. The resistance to the crush forces and the rodent bites is achieved from number of wounds of a plurality of tensile strength members, a third layer and a fourth layer. The layered structure and the distribution of the discrete elements of the optical fiber cable in provided in two dimensions. In an embodiment of the present disclosure, the optical fiber cable has a 12F cable design. The 12F design of the optical fiber cable includes a single sleeve. In general, the optical fiber cable with the single sleeve is laid straight and requires no stranding of sleeves. In an embodiment of the present disclosure, the diameter of the optical fiber cable is about 6.1 millimeters for the 12 cable design. In another embodiment of the present disclosure, the diameter of the optical fiber cable is about 1.3 millimeters. The free space for the single sleeve in the optical fiber cable is about 0.2 millimeters for the 12F cable design. In another embodiment of the present disclosure, the optical fiber cable has a 24F cable design. The 24F cable design has two sleeves. In an embodiment of the present disclosure, the optical fiber cable has a fiber count of 24, an inner diameter of each of the two sleeves is 1.05 millimeters and an outer diameter of each of the two sleeves is about 1.3 millimeters. In an embodiment of the present disclosure, the optical fiber cable includes 2 yarn threads and a free space to access each of the two sleeves is 0.4 millimeters. Moreover, the diameter of the stranded core is 3.5 millimeters. The optical fiber cable may have any suitable diameter. In an embodiment of the present disclosure, the diameter is 10.2 millimeters. In another embodiment of the present disclosure, the diameter is 14.4 millimeters. In yet another embodiment of the present disclosure, the diameter of the optical fiber cable is 7.4 millimeters.

According to an embodiment, the plurality of sleeves may be made from any buffer material. In an embodiment of the present disclosure, the plurality of sleeves is made from TPE. In another embodiment of the present disclosure, the plurality of sleeves may be made from any suitable material. The plurality of sleeves provides mechanical isolation, physical damage protection and identification of each of the plurality of fibers. In addition, each of the plurality of sleeves may tear off by bare hands. The tear of the plurality of sleeves by bare hands facilitates monitoring structural defects in the plurality of fibers. Each sleeve is characterized by an inner diameter and an outer diameter. In an embodiment of the present disclosure, each sleeve of the plurality of sleeves has the outer diameter of about 1.35 millimeters and the inner diameter of about 1.05 millimeters. In another embodiment of the present disclosure, each sleeve of the plurality of sleeves may have any suitable inner diameter and the outer diameter. In addition, the plurality of sleeves may be stranded in any manner. In an embodiment of the present disclosure, the plurality of sleeves is helically stranded substantially along the longitudinal axis. In general, the helical stranding is turning of each of the plurality of sleeves substantially along the longitudinal axis periodically in a pre-defined direction. The pre-defined direction is at least one of a clockwise direction and an anticlockwise direction. In another embodiment of the present disclosure, the plurality of sleeves is SZ stranded substantially along the longitudinal axis. In general, each of the plurality of sleeves is wound substantially along the longitudinal axis in sections with a first direction of winding in an S-shape alternating with the sections with a second direction of winding in a Z-shape. The plurality of sleeves is stranded to form a stranded core. The plurality of sleeves is rotated in an S shape for the pre-defined number of the turns. In an embodiment of the present disclosure, the pre-defined number of turns lies in a range of 2-5. The stranded plurality of sleeves opens up after the pre-defined number of turns due to reverse oscillations.

According to an embodiment, each of the plurality of optical fibers touches each of a corresponding plurality of sleeves in an enclosed form. In addition, the plurality of optical fibers is divided among each of the plurality of sleeves. Each sleeve of the plurality of sleeves may include more or less than 12 fibers. In addition, each of the plurality of optical fibers is a standard ITU-T G.652D silica optical fiber. Further, the plurality of optical fibers are color coded for each sleeve of the plurality of sleeves.

According to an embodiment, the plurality of yarn threads prevents ingression of water inside each of the plurality of sleeves. Moreover, the plurality of yarn threads swells from the absorption of the water and moisture. In addition, each of the plurality of yarn threads is a SAP coated polyester thread. In general, the SAP is the polymer that absorbs and retains extremely large amounts of any liquid relative to their own mass. Examples of the SAP materials include but may not be limited to the polyacrylamide copolymer, the ethylene maleic anhydride copolymer, the cross-linked carboxymethylcellulose, the polyvinyl alcohol copolymer, the cross-linked polyethylene oxide and the starch grafted copolymer of polyacrylonitrile. Each of the plurality of yarn threads may include any number of yarn threads. In an embodiment of the present disclosure, the number of yarn threads is more than two. In another embodiment of the present disclosure, the number of yarn threads is less than two.

According to an embodiment, the first layer includes a pre-defined number of stacked layers of yarn. The binding of the stranded plurality of sleeves is performed for retention of the lay length and a uniform stress distribution along length of the optical fiber cable. In addition, the first layer is made of a high strengthening aramid yarn. The first layer is the binding element for the stranded plurality of sleeves. In an embodiment of the present disclosure, the pre-defined number of the stacked layers of the yarn is 5. In another embodiment of the present disclosure, the pre-defined number of the stacked layers of yarn is 8. In yet another embodiment of the present disclosure, the pre-defined number of the stacked layers of yarn is more or less than 5. In addition, thickness of the first layer is 0.3 mm. Moreover, the first layer reduces the stress on the plurality of optical fibers in high tensile load environment. The first layer preserves the lay length of the plurality of sleeves in the optical fiber cable.

According to an embodiment, the second layer provides barrier to prevent the ingression of the water and the moisture. The second layer is a layer of water blocking tape. In addition, the second layer is made of the SAP type material. The arrangement of second layer between first layer and the third layer prevents sticking of the high-first layer to the third layer during the sheathing process. In addition, the arrangement of the first layer and the third layer prevent sticking in the longitudinal and the radial direction.

According to an embodiment, the third layer is made up of a strong polymer based jacket with the inherent ability to resist crushes, kinks and tensile stress. In an embodiment, the third layer has a thickness of about 1.8 millimeters. In another embodiment of the present disclosure, the third layer has the thickness more than 1.8 millimeters. In yet another embodiment of the present disclosure, the third layer has the thickness less than 1.8 millimeters. Moreover, the third layer may be made of any suitable material. In an embodiment of the present disclosure, the third layer is made of a HDPE material. In another embodiment of the present disclosure, the third layer is made of MDPE material. The thickness of the third layer is 1.8 millimeters.

According to an embodiment, the first strength member and the second strength member are circular in cross section. The first strength member and the second strength member extend longitudinally in the third layer along the length of the optical fiber cable. In an embodiment of the present disclosure, the third layer contains two strength members. In another embodiment of the present disclosure, the third layer contains two or more number of strength members.

Moreover, the first strength member and the second strength member provide robustness and tensile strength to the optical fiber cable. In addition, an increase in the length of the plurality of sleeves results in micro and macro bends inside the optical fibers. The micro and the macro bends results in higher attenuation in the optical fiber cable 200. Accordingly, the first strength member and the second strength members act as anti-buckle or anti-shrink elements. In addition, the first strength member and the second strength member prevent the third layer from shrinkage. Furthermore, the first strength member and the second strength member are present in the pre-defined location. In an embodiment of the present disclosure, the location of the first embedded strength member and the second embedded strength member is diametrically opposite in a vertical plane. In another embodiment of the present disclosure, the location of the first embedded strength member and the second embedded strength member may be anywhere inside the third layer. In an embodiment of the present disclosure, each of the plurality of strength members may be made of any suitable metal or non-metal. In another embodiment of the present disclosure, each of the plurality of strength members is made of FRP. In an embodiment of the present disclosure, diameter of the first strength member and the second strength member is 1.2 millimeters. In another embodiment of the present disclosure, the diameter of the first strength member and the second strength member may be more or less than 1.2 millimeters.

According to an embodiment, the coating of EAA and the coating of EAA provides robust bonding with the third layer. In addition, the coating of EAA and the coating of EAA prevents slipping of the plurality of strength members. In general, the coating of EAA and the coating of EAA provides frictional resistance between each of the plurality of strength members and the third layer against longitudinal tensile stress.

According to an embodiment, the optical fiber cable may or may not contain rip cords. In addition, the plurality of rip cords is placed along the length of the optical fiber cable. The first rip cord and the second rip cord extend longitudinally between the second layer and the third layer to facilitate stripping of the third layer. The plurality of rip cords is made from co-polyester material.

According to an embodiment, each of plurality of tensile strength member provides resistance against the rodent bite and the crush forces from underground burial. The plurality of tensile strength members may vary in number depending on requirements of the directly buried optical fiber cable. In an embodiment, the plurality of tensile strength members is made up of the FRP. In another embodiment of the present disclosure, other materials can also be used based on requirements and suitability. The other materials include copper, steel, non-metals and aramids. In an embodiment of the present disclosure, each tensile strength member of the plurality of tensile strength members has a square cross-section. In another embodiment of the present disclosure, each strengthening member of the plurality of tensile strength members has a circular cross-section. In addition, breadth of each tensile strength member of the plurality of tensile strength members is about 3 mm. In addition, the thickness of each tensile strength member of the plurality of tensile strength members is about 0.7 mm.

According to an embodiment, fourth layer is a sheathing layer. The fourth layer is placed to provide additional protection to the optical fiber cable. In an embodiment of the present disclosure, the fourth layer is made of the HDPE. In another embodiment of the present disclosure, the fourth layer is made of MDPE. In yet another embodiment of the present disclosure, the fourth layer is made of any suitable material. In addition, the thickness of the fourth layer is about 1.5 mm.

According to an embodiment, the plurality of rip cords extends longitudinally to strip or open the third layer. In an embodiment of the present disclosure, the plurality of rip cords is present diametrically opposite between the second layer and the third layer. In an embodiment of the present disclosure, the optical fiber cable may have more or less than two rip cords. The plurality of rip cords is made of any suitable material. In an embodiment of the present disclosure, each of the plurality of rip cords is made of polyester. In another embodiment of the present disclosure, each of the plurality of rip cords is made of aramid fibers.

According to an embodiment, the optical fiber cable possesses two sheathing layers and two layers of strengthening yarns to provide a robust and strong fiber cable for outdoor applications. The optical fiber cable has a layered structure and the distribution of the discrete elements in two dimensions. The optical fiber cable may have a suitable diameter. In an embodiment of the present disclosure, the diameter is 10 millimeters. In another embodiment of the present disclosure, the diameter is 14.2 millimeters.

According to an embodiment, each of the plurality of sleeves is a tube for encapsulating the plurality of optical fibers. In an embodiment of the present disclosure, the plurality of sleeves is made from TPE. In addition, each of the plurality of sleeves may tear off by bare fingers. The tear of the plurality of sleeves by bare hands facilitates an easy access to fibers during termination/installation. In another embodiment of the present disclosure, the plurality of sleeves may be made from any suitable material. The plurality of sleeves provides mechanical isolation, physical damage protection and identification of each of the plurality of fibers. In addition, each sleeve is characterized by an inner diameter and an outer diameter. In an embodiment of the present disclosure, the inner diameter is 1.05 mm and the outer diameter is about 1.3 mm. The optical fiber cable may have more or less than 11 sleeves. In addition, the plurality of sleeves is stranded. In an embodiment of the present disclosure, the plurality of sleeves is helically stranded substantially along the longitudinal axis. In general, the helical stranding is turning of each of the plurality of sleeves substantially along the longitudinal axis periodically in a pre-defined direction. The pre-defined direction is at least one of a clockwise direction and an anticlockwise direction. In another embodiment of the present disclosure, the plurality of sleeves is SZ stranded substantially along the longitudinal axis. In general, each of the plurality of sleeves is wound substantially along the longitudinal axis in sections with a first direction of winding in an S-shape alternating with the sections with a second direction of winding in a Z-shape. In an embodiment of the present disclosure, the diameter of the stranded core is about 2.3 millimeters and free space for the plurality of sleeves in the optical fiber cable is about 0.7 millimeters. In another embodiment of the present disclosure, the diameter of the stranded core is about 6.1 millimeters and the free space for each of the plurality of sleeves in the optical fiber cable is about 0.7 millimeters. In yet another embodiment of the present disclosure, the diameter of the stranded core may have any suitable value and the free space for the plurality of sleeves in the optical fiber cable may have any suitable value. Furthermore, the plurality of sleeves is rotated in an S shape for a pre-defined number of the turns. The pre-defined number of turns lies in a range of 2-5. Further, the direction of the rotation of the plurality of sleeves is reversed. The reversal of the direction of the rotation is performed to twist the plurality of sleeves to a Z shape. In an embodiment of the present disclosure, the reversal is followed by the pre-defined number of the turns. The stranded plurality of sleeves loosens up after a pre-defined number of turns due to reverse oscillations in the optical fiber cable

According to an embodiment, each of the plurality of optical fibers touches each of a corresponding plurality of sleeves in an enclosed form. The plurality of optical fibers is divided among each of the plurality of sleeves. Each sleeve of the plurality of sleeves may include more or less than 12 fibers. In addition, each of the plurality of optical fibers is a standard ITU-T G.652D silica optical fiber. Further, the plurality of optical fibers is color coded for each sleeve of the plurality of sleeves.

According to an embodiment, the plurality of yarn threads prevents ingression of water inside each of the plurality of sleeves. Moreover, the plurality of yarn threads swells from the absorption of the water and the moisture. In addition, the plurality of yarn threads is a SAP coated polyester thread. In general, the SAP is the polymer that absorbs and retains extremely large amounts of any liquid relative to their own mass. Examples of the SAP materials include but may not be limited to the polyacrylamide copolymer, the ethylene maleic anhydride copolymer, the cross-linked carboxymethylcellulose, the polyvinyl alcohol copolymer, the cross-linked polyethylene oxide and the starch grafted copolymer of polyacrylonitrile. The plurality of yarn threads may include any number of yarn threads. In an embodiment of the present disclosure, the number of yarn threads is more than two. In another embodiment of the present disclosure, the number of plurality of yarn threads is less than two. The optical fiber cable may have more or less than three yarn threads.

According to an embodiment, the first layer includes a pre-defined number of stacked layers of yarn. In addition, the first layer is made of a high strengthening aramid yarn. The first layer is a binding element for the stranded plurality of sleeves. In an embodiment of the present disclosure, the pre-defined number of the stacked layers of yarn is 5. In another embodiment of the present disclosure, the pre-defined number of stacked layers of yarn is 8. In yet another embodiment of the present disclosure, the pre-defined number of the stacked layers of yarn is more or less than 5. In addition, thickness of the first layer is 0.3 mm. Moreover, the first layer reduces the stress on the plurality of optical fibers in a high tensile load environment. The first layer preserves the lay length of the plurality of sleeves in the optical fiber cable.

According to an embodiment, the second layer touches surface of the first layer in the surrounded form. The second layer provides barrier to prevent the ingression of the water and the moisture. The second layer is a layer of water blocking tape. In addition, the second layer is made of the SAP type material. The second layer is preferably placed underneath the third layer. The arrangement of second layer between first layer and the third layer prevents sticking of the first layer to the third layer during sheathing process. In addition, the arrangement of the first layer and the third layer prevent sticking in the longitudinal and the radial direction.

According to an embodiment, the third layer is made up of a strong polymer based jacket with the inherent ability to resist crushes, kinks and tensile stress. In an embodiment, the third layer has a thickness of about 1.8 millimeters. In another embodiment of the present disclosure, the third layer has the thickness more than 1.8 millimeters. In yet another embodiment of the present disclosure, the third layer has the thickness less than 1.8 millimeters. Moreover, the third layer may be made of any suitable material. In an embodiment of the present disclosure, the third layer is made of a HDPE material. In another embodiment of the present disclosure, the third layer is made of MDPE material.

According to an embodiment, the first strength member and the second strength member are circular in cross section. The first strength member and the second strength member extend longitudinally in the third layer along the length of the optical fiber cable. In an embodiment of the present disclosure, the third layer contains two strength members. In another embodiment of the present disclosure, the third layer contains two or more number of strength members. Moreover, the first strength member and the second strength member provide robustness and tensile strength to the optical fiber cable. In addition, an increase in the length of the plurality of sleeves results in micro and macro bends inside the optical fibers. The micro and the macro bend results in higher attenuation or power loss in the optical fiber cable. Accordingly, the first strength member and the second strength members act as anti-buckle or anti-shrink elements. In addition, the first strength member and the second strength member prevent the third layer from shrinkage. Furthermore, the first strength member and the second strength member are present in the pre-defined location. In an embodiment of the present disclosure, the location of the first embedded strength member and the second embedded strength member is diametrically opposite in a vertical plane. In another embodiment of the present disclosure, the location of the first embedded strength member and the second embedded strength member is diametrically opposite in a horizontal plane. In an embodiment of the present disclosure, each of the plurality of strength members may be made of any suitable metal or non-metal. In another embodiment of the present disclosure, each of the plurality of strength members is made of FRP. In an embodiment of the present disclosure, diameter of the first strength member and the second strength member is 1.4 millimeters. In another embodiment of the present disclosure, the diameter of the first strength member and the second strength member is 1.2 millimeters.

According to an embodiment, the coating of EAA and the coating of EAA provides robust bonding with the third layer. In addition, the coating of EAA and the coating of EAA prevents slipping of the plurality of strength members. In general, the coating of EAA and the coating of EAA provides frictional resistance between each of the plurality of strength members and the third layer against longitudinal tensile stress.

According to an embodiment, the first rip cord and the second rip cord extends longitudinally between the second layer and the third layer to facilitate stripping of the third layer. Each of the plurality of rip cords is made from co-polyester material.

According to an embodiment, a layer of fiber glass yarn provides high crush resistance to the optical fiber cable. In addition, the layer of fiber glass yarn is placed to provide additional strength to the optical fiber cable. In an embodiment of the present disclosure, the layer of fiber glass yarn has a thickness of 0.8 millimeter. In another embodiment of the present disclosure, the thickness of the layer of fiber glass yarn may be more or less than 0.8 millimeters. The layer of fiber glass yarn is enclosed between the third layer and the fourth layer to provide additional protection and hardness to the optical fiber cable.

According to an embodiment, a fourth layer is placed to protect the optical fiber cable against the high crush resistance. In an embodiment of the present disclosure the fourth layer is made of the HDPE. In another embodiment of the present disclosure, the fourth layer is made of MDPE. In yet another embodiment of the present disclosure, the fourth layer is made of any suitable material. In addition, the thickness of the fourth layer is about 1.5 mm.

### DETAILED DESCRIPTION

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

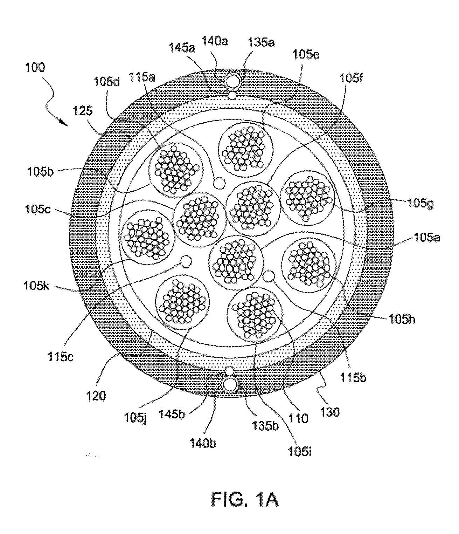

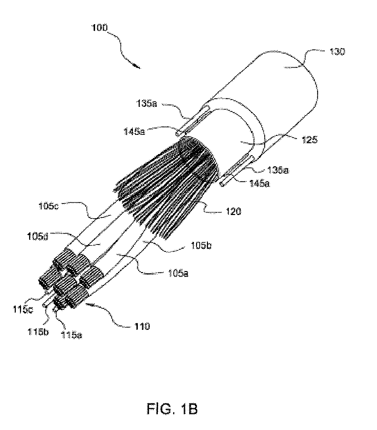

Referring now to the drawings, particularly by their reference numbers, FIG. 1A illustrates a cross-sectional view of an optical fiber cable **100** for indoor and outdoor applications, in accordance with an embodiment of the present disclosure. The optical fiber cable **100** includes a plurality of sleeves **105a-105k,** a plurality of optical fibers **110,** a plurality of yarn threads **115a-c,** a first layer **120,** an second layer **125** and a third layer **130.** In addition, a plurality of strength members **135a-b** is parallel to a longitudinal axis of the optical fiber cable **100** (as seen in **FIG. 1A** in conjunction with the perspective view of the optical fiber cable **100** provided in **FIG. 1B**). The plurality of sleeves **105a-105k** encloses the plurality of optical fibers **110.** Further, the plurality of yarn threads **115a-c** is dispersed between each of the plurality of sleeves **105a-105k**. Furthermore, the plurality of sleeves **105a-105k** is surrounded by the first layer 120. In general, the second layer **125** touches surface of the first layer **120** in the surrounded form. In addition, the second layer **125** is surrounded with the third layer **135.** Further, the plurality of strength members **135a-b** is embedded in the third layer **130.** The first strength member **135a** and the second strength member **135b** are covered with a coating of ethylene acrylic acid (hereinafter "EAA") **140a** and a coating of EAA **140b** respectively. A plurality of rip cords **145a-b** is positioned between the second layer **125** and the third layer **130.**

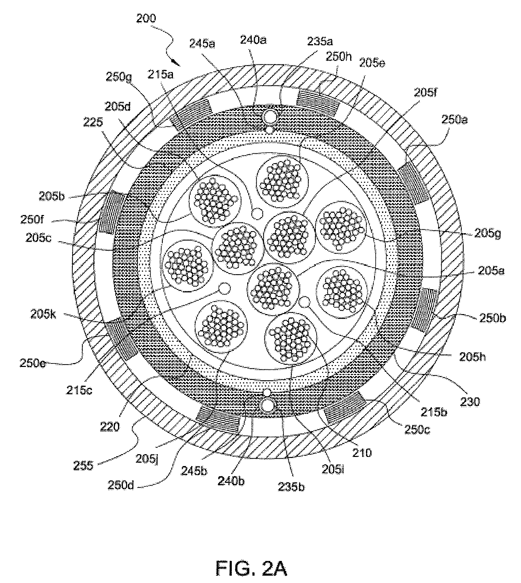

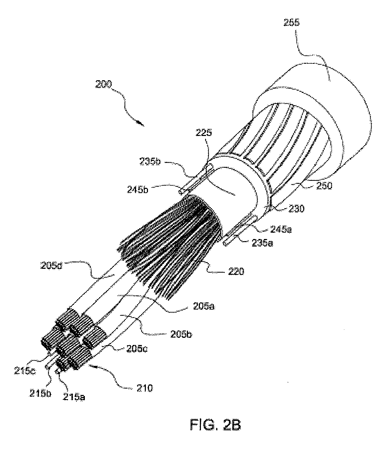

**FIG. 2A** illustrates a cross sectional view of the optical fiber cable **200** for underground deployment, in accordance with another embodiment of the present disclosure. The layered structure of the optical fiber cable **200** includes a plurality of sleeves **205a-k,** a plurality of optical fibers **210,** a plurality of yarn threads **215a-215c**, a first layer **220,** a second layer **225,** a third layer **230,** a first strength member 235a and a second strength member **235b.** In addition, the layered structure of the optical fiber cable **200** includes a coating of EAA **240a** on the first strength member **235a,** a coating of EAA **240b** on the second strength member **235b,** a plurality of tensile strength members **250a-h** and a fourth layer **255** (as seen in **FIG. 2A** in conjunction with the perspective view of the optical fiber cable **200** provided in **FIG. 2B****).** Each of the plurality of sleeves **205a-205k** is a tube for encapsulating the plurality of optical fibers **210.** The plurality of sleeves **205a-k** encloses the plurality of optical fibers **210.** The plurality of yarn threads **215a-c** is dispersed between each of the plurality of sleeves **205a-k.** The plurality of sleeves **205a-k** is surrounded by the first layer **220.** In addition, the second layer **225** surrounds the first layer **220.** The second layer **225** is preferably placed underneath the third layer **230.** The second layer **225** is surrounded by the third layer **230.** The first strength member **235a** and the second strength member **235b** are embedded in the third layer **230.** The first strength member **235a** and the second strength member **235b** are covered with the coating of EAA **240a** and the coating of EAA **240b** respectively. A plurality of rip cords **245a-b** is positioned between the second layer **225** and the third layer **230** of the optical fiber cable **200.** The plurality of rip cords **245a-b** includes a first rip cord **245a** and a second rip cord **245b.** The first rip cord **245a** and the second rip cord **245b** are present diametrically opposite between the second layer **225** and the third layer **230.** The plurality of tensile strength members **250a-h** helically surrounds the third layer **230.** Further, the fourth layer **255** surrounds and encloses the plurality of tensile strength members **250a-h.**

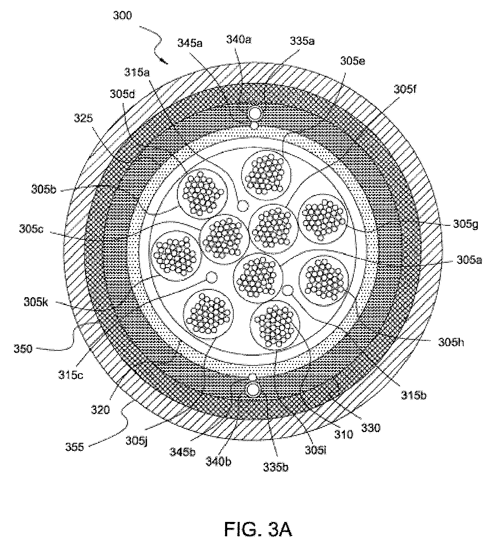

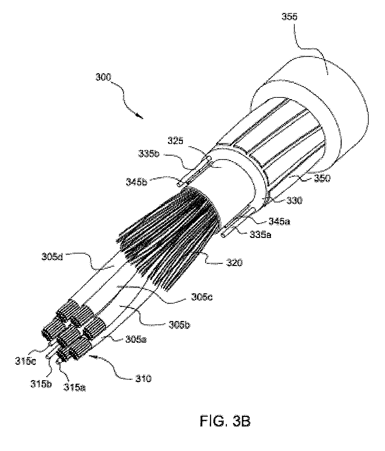

**FIG. 3A** illustrates a cross sectional view of an optical fiber cable **300** with high crush resistance, in accordance with yet another embodiment of the present disclosure. The layered structure of the optical fiber cable **300** includes a plurality of sleeves **305a-305k,** a plurality of optical fibers **310,** a plurality of yarn threads **315a-315c,** a first layer **320,** a second layer **325,** a third layer **330,** a plurality of strength member **335a-b.** In addition, the layered structure of the optical fiber cable **300** includes a coating of EAA **340a** on the first strength member **335a,** a second coating of EAA **340b** on the second strength member **335b,** a layer of fiber glass yarn **350** and a fourth layer **355** (as seen in **FIG. 3A** in conjunction with the perspective view of the optical fiber cable **300** provided in **FIG. 3B****).** The plurality of sleeves **305a-305k** encloses the plurality of optical fibers **325.** The plurality of yarn threads **315a-315c** is dispersed between each of the plurality of sleeves **305a-305k**. The plurality of sleeves **305a-305k** surrounded by the first layer **320.** The second layer **325** surrounds the first layer **320.** The second layer **325** is surrounded by the third layer **330.** The first strength member **335a** and the second strength member **335b** are embedded in the third layer **330.** The first strength member **335a** and the second strength member **335b** are covered with the coating of EAA **340a** and the coating of EAA **340b** respectively. A plurality of rip cords **345a-b** is positioned between the second layer **325** and the third layer **330** of the optical fiber cable **300.** The plurality of rip cords includes a first rip cord **345a** and a second rip cord **345b** present diametrically opposite between the second layer **325** and the fourth layer **330.** The layer of fiber glass yarn **350** is wound helically around the third layer **330** to provide the rodent bite protection to the optical fiber cable **300.** The fourth layer **355** surrounds and encloses the fiber glass yarns **350.**

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. An optical fiber cable comprising:
a plurality of sleeves (105a-k; 205a-k; 305a-k) substantially along a longitudinal axis of the optical fiber cable, each of the plurality of sleeves (105a-k; 205a-k; 305a-k) encloses a plurality of optical fibers (110; 210; 310);
a first layer (120; 220; 320) surrounding the plurality of sleeves (105a-k; 205a-k; 305a-k), the first layer (120; 220; 320) is made of a pre-defined number of stacked layers of yarn, the pre-defined number of the stacked layers of yarn in the first layer (120; 220; 320) defines tensile strength of the optical fiber cable;
a second layer (125; 225; 325) surrounding the first layer (120; 220; 320), the second layer (125; 225; 325) prevents ingression of water inside the plurality of sleeves (105a-k; 205a-k; 305a-k); and
a third layer (130; 230; 330) surrounding the second layer (125; 225; 325),
**characterized in that** the third layer (130; 230; 330) has a plurality of strength members (135a-b; 235a-b; 335a-b) embedded inside the third layer (130; 230; 330), each of the plurality of strength members (135a-b; 235a-b; 335a-b) is coated with a layer of ethylene acrylic acid (140a-b; 240a-b; 340a-b), the layer of ethylene acrylic acid (140a-b; 240a-b; 340a-b) prevents slipping of the plurality of strength members (135a-b; 235a-b; 335a-b), the second layer (125; 225; 325) prevents sticking of the first layer (120; 220; 320) to the third layer (130;140; 150) at a pre-determined range of temperature in a range of 160°C-230 °C and prevents ingression of water inside the optical fiber cable.

2. The optical fiber cable according to claim 1, further comprising:
a layer of fiber glass yarn (350) helically surrounding the third layer (330), **characterized in that** the layer of fiber glass yarn (350) provides rodent protection to the optical fiber cable; and
a fourth layer (355) surrounding the layer of fiber glass yarn (350), **characterized in that** the fourth layer (355) is made of a high density polyethylene material.

3. The optical fiber cable according to claim 1, further comprising:
a layer of fiber glass yarn (350) helically surrounding the third layer (330), **characterized in that** the layer of the fiber glass yarn (350) has a thickness of 0.8 millimeter; and
a fourth layer (355) surrounding the layer of fiber glass yarn (350), **characterized in that** the fourth layer (355) has a thickness of 1.5 millimeters.

4. The optical fiber cable according to claim 1, further comprising:
a plurality of tensile strength members (250a-h) helically surrounding the third layer (230), **characterized in that** the plurality of tensile strength members (250a-h) is made of fiber reinforced plastic; and
a fourth layer (255) surrounding the plurality of tensile strength members (250a-h), **characterized in that** each of the plurality of tensile strength members (250a-h) possesses a square cross-section.

5. The optical fiber cable according to claim 1, further comprising:
a plurality of tensile strength members (250a-h) helically surrounding the third layer (230), **characterized in that** each of the plurality of tensile strength members (250a-h) have a breadth of 3 millimeters and a thickness of 0.7 millimeter and each of the plurality of tensile strength members (250a-h) has a substantially circular cross-section; and
a fourth layer (255) surrounding the plurality of tensile strength members (250a-h), **characterized in that** the fourth layer (255) has a thickness of 5 millimeters.

6. The optical fiber cable according to claim 1, **characterized in that** the plurality of sleeves (105a-k; 205a-k; 305a-k) is helically stranded substantially along the longitudinal axis, the plurality of sleeves (105a-k; 205a-k; 305a-k) is helically stranded by turning each of the plurality of sleeves (105a-k; 205a-k; 305a-k) substantially along the longitudinal axis periodically in a pre-defined direction and the pre-defined direction is at least one of a clockwise direction and an anticlockwise direction.

7. The optical fiber cable according to claim 1, **characterized in that** the plurality of sleeves (105a-k; 205a-k; 305a-k) is S-Z stranded substantially along the longitudinal axis and each of the plurality of sleeves (105a-k; 205a-k; 305a-k) is wound substantially along the longitudinal axis in a first direction of winding in an S-shape alternating with a second direction of winding in a Z-shape.

8. The optical fiber cable according to claim 1, further comprising a plurality of yarn threads (115a-c; 215a-c; 315a-c) dispersed between each of the plurality of sleeves (105a-k; 205a-k; 305a-k), **characterized in that** each of the plurality of yarn threads (115a-c; 215a-c; 315a-c) is a super absorbent polymer coated polyester thread.

9. The optical fiber cable according to claim 1, further comprising a plurality of rip cords (145a-b; 245a-b; 345a-b) positioned at an interface of the second layer (125; 225; 325) and the third layer (130; 230; 330), **characterized in that** the plurality of rip cords (145a-b; 245a-b; 345a-b) facilitate stripping of the third layer (130; 230; 330).

10. The optical fiber cable according to claim 1, **characterized in that** each of the plurality of sleeves (105a-k; 205a-k; 305a-k) is filled with water blocking gel, the water blocking gel is made of a thixotropic material and the first layer (120; 220; 320) is made of an aramid yarn.

11. The optical fiber cable according to claim 1, **characterized in that** each of the plurality of sleeves (105a-k; 205a-k; 305a-k) has an outer diameter of 1.35 millimeters and an inner diameter of 1.05 millimeters, diameter of a stranded core is 2 millimeters and a free space for accessing the plurality of sleeves (105a-k; 205a-k; 305a-k) is 0.4 millimeter, the third layer (130; 230; 330) has a thickness of about 1 millimeter, the third layer (130; 230; 330) is made of a high density polyethylene material, the diameter of each strength member of the plurality of strength members (135a-b; 235a-b; 335a-b) is 0.4 millimeter, each of the plurality of strength members (135a-b; 235a-b; 335a-b) is made of fiber reinforce plastic and the optical fiber cable has a diameter of 4 millimeters.

12. The optical fiber cable according to claim 1, **characterized in that** diameter of a stranded core is 11.5 millimeters and a free space for accessing the plurality sleeves (105a-k; 205a-k; 305a-k) is 0.5 millimeters, the first layer (120; 220; 320) has a thickness of 1 millimeter, thickness of the second layer (125; 225; 325) is about 0.3 millimeter, the second layer (125; 225; 325) is made of super absorbent polymer material, the third layer (130; 230; 330) has a thickness of about 2.6 millimeters, the third layer (130; 230; 330) is made of medium density polyethylene material, the plurality of strength members (135a-b; 235a-b; 335a-b) have a diameter of 1.6 millimeters, the optical fiber cable has a diameter of 18 millimeters and the plurality of sleeves (105a-k; 205a-k; 305a-k) is made from a material selected from a group comprising of a thermoplastic co-polyester elastomer and a low smoke zero halogen buffer tube

13. The optical fiber cable according to claim 1, **characterized in that** diameter of a stranded core is 2.3 millimeters and a free space for accessing the plurality sleeves (105a-k; 205a-k; 305a-k) is 0.7 millimeters, the third layer (130; 230; 330) has a thickness of about 1.8 millimeters, the third layer (130; 230; 330) is made of medium density polyethylene material, the plurality of strength members (135-b; 235a-b; 335a-b) have a diameter of 1.2 millimeters and the optical fiber cable has a diameter of 10 millimeters.

14. The optical fiber cable according to claim 1, **characterized in that** diameter of a stranded core is 6.1 millimeters and a free space for accessing the plurality sleeves (105a-k; 205a-k; 305a-k) is 0.7 millimeters, the third layer (130; 230; 330) has a thickness of about 2 millimeters, the third layer (130; 230; 330) is made of medium density polyethylene material, the plurality of strength members (135a-b; 235a-b; 335a-b) have a diameter of 1.4 millimeters and the optical fiber cable has a diameter of 14.2 millimeters.

15. The optical fiber cable according to claim 1, **characterized in that** each of the plurality of sleeves (105a-k; 205a-k; 305a-k) has an outer diameter of 1.40 millimeters and an inner diameter of 1.05 millimeters, diameter of a stranded core is 2.4 millimeters and a free space for accessing the plurality of sleeves (105a-k; 205a-k; 305a-k) is 0.8 millimeter, thickness of the first layer (120; 220; 320) is 0.3 millimeter, the third layer (130; 230; 330) has a thickness of about 1.6 millimeter, the third layer (130; 230; 330) is made of a low smoke zero halogen material, the diameter of each strength member of the plurality of strength members (135a-b; 235a-b; 335a-b) is 1 millimeter and the optical fiber cable has a diameter of 5.9 millimeters.
